# EUROPEAN PATENT APPLICATION

(11) **EP 4 831 795 A1**
(43) Date of publication of application: **28.10.2026**
(21) Application number: 26171243.4
(22) Date of filing: 08.04.2026
(51) Int. Cl.: G06F 8/65, H04L 9/08, G06F 21/57, H04L 67/00

(54) **SYSTEM AND METHOD FOR UPDATING SOFTWARE AND PUBLIC KEYS AIRCRAFT SYSTEMS**

(30) Priority: 23.04.2025 US 202519187703
(71) Applicant: General Electric Company, Cincinnati, Ohio 45215 (US)
(72) Inventor: KING, Randall Benjamin, Evendale, 45215 (US)
(74) Representative: Openshaw & Co.

(57) **Abstract**

A system and method for updating public keys in a computing system are described herein. In some approaches, a computing system (404) having an installed public key receives (412) a loadable part that includes a new public key. The new public key is compared (414) with the installed public key to determine whether the new public key matches (416)(418) the installed public key, and an authentication check is performed (420) on the new public key in response to the new public key not matching (418) the installed public key. In some approaches, the method include bypassing the authentication check (420) on the new public key in response to the new public key matching (416) the installed public key. In some approaches, the computing system (404) includes an electronic engine controller.

## Description

### TECHNICAL FIELD

These teachings relate generally to aircraft systems and more particularly to systems and methods for updating software in the aircraft systems.

### BACKGROUND

Modern aircraft can include one or more systems controlled by computing systems. For example, an electronic engine controller may be used to control one or more engines of the aircraft to provide propulsion power to the aircraft. Software installed on the computing systems may be used to control the various operations and functions of the one or more engines or other systems on the aircraft. In some approaches, the software installed on the computing systems may need to be updated, reconfigured, or reloaded, which may increase the likelihood of software configuration management and operator guidance issues. Accordingly, a system and method for updating software in the computing systems may be desirable.

### BRIEF DESCRIPTION OF DRAWINGS

Various needs are at least partially met through provision of the systems and methods for updating software in aircraft systems described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of an engine in accordance with various embodiments of these teachings;
FIG. 2 is a block diagram of a data loader and an engine in accordance with various embodiments of these teachings;
FIG. 3 is a block diagram of a system for updating public keys in accordance with various embodiments of these teachings;
FIG. 4 is a flow diagram of a process for updating public keys in accordance with various embodiments of these teachings;
FIG. 5 is a flow diagram of a process for updating public keys in a computing system in accordance with various embodiments of these teachings;
FIG. 6 is a block diagram of a process for authenticating and updating a public key in a computing system in accordance with various embodiments of these teachings; and
FIG. 7 is a block diagram of a computing system in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods for updating software and public keys in an aircraft system described herein provide approaches for authenticating and updating public keys in computing systems on an aircraft. In these regards and as described herein, computing systems on the aircraft can have loadable parts that include a public key loaded through a data loader.

In some embodiments, an aircraft includes one or more engines that can include and/or be in communication with one or more computing systems. In some embodiments, the computing system is an electronic engine controller. The various operations and functionality of the aircraft may be controlled by field loadable software, referred to herein as loadable parts, installed in the one or more computing systems. For example, the loadable parts may be installed in the electronic engine controller to control the various operations and functions of the engine. In some forms, the loadable parts may be considered part of the engine configuration.

In some embodiments, the loadable parts may need to be reinstalled, or new loadable parts may need to be installed at various points during the operation of the aircraft. The computing system may perform authentication of the loadable parts prior to storing the loadable parts in the computing system. For example, to perform authentication of the loadable parts during a reprogramming operation, the computing system uses a public key associated with the loadable part to decrypt hashes of the loadable part that had been encrypted by a secret private key. The computing system calculates hashes of the loadable part and compares the decrypted hashes to the calculated hashes. If the hashes match, the loadable part is considered authentic. However, public and private key pairs may need to be updated over time due to expiration of the keys or due to the private key being no longer secret.

In traditional approaches, to update the public keys in the computing system, the new public keys must be signed with the private key from the existing public-private key pair. After the new public key is stored in the computing system, that same load image of the public key cannot be loaded again because the authentication will fail. Therefore, to update the public keys two loadable parts may need to be released: one loadable part signed with the previous public-private key pair (loaded only once) and one loadable part signed with the new public-private key pair (loaded anytime after the first load). In such approaches, since the loadable software part can only be loaded once, special load instructions may be used. However, these instructions can cause configuration management issues and significant operator effort due to the precise sequence of steps outlined in the instructions and specific order to load the loadable parts, increasing the likelihood of operator confusion. Accordingly, the systems and methods for updating the public keys as described herein allow updates to the public keys in the computing system while using a single loadable part that will load successfully the first time and on subsequent requests. In some embodiments, the computing system will authenticate the public keys in a load when the loadable part signed with the new public key differs from the public keys already programmed in the computing system.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

As used herein, "loadable part" refers to any software or data that can be loaded on an aircraft without removal of the hardware of the aircraft. It is generally contemplated that the loadable part can be field-loaded on the computing system to update or modify a functionality, configuration, or operation of the computing system. In some embodiments, the loadable part may include engine control software.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

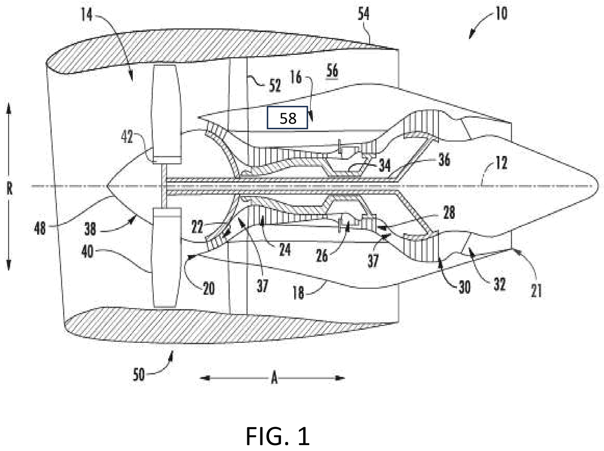

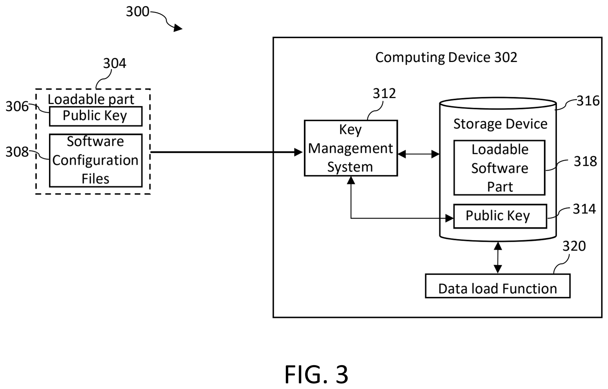

Referring now to FIG. 1, a schematic cross-sectional view of a gas turbine engine 10 is provided in accordance with an exemplary embodiment of the present disclosure. More particularly, for the embodiment of Fig. 1, the gas turbine engine is a high-bypass turbofan jet engine 10, referred to herein as "turbofan engine 10." As shown in Fig. 1, the turbofan engine 10 defines an axial direction A (extending parallel to a longitudinal centerline 12 provided for reference) and a radial direction R. The turbofan engine 10 also defines a circumferential direction C (see Fig. 3) extending circumferentially about the axial direction A. In general, the turbofan 10 includes a fan section 14 and a turbomachine 16 disposed downstream from the fan section 14.

The exemplary turbomachine 16 depicted is generally enclosed within a substantially tubular outer casing 18 that defines an annular inlet 20 and an annular exhaust 21. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The compressor section, combustion section 26, turbine section, and nozzle section 32 together define a core air flowpath 37 therethrough.

For the embodiment depicted, the fan section 14 includes a fixed pitch fan 38 having a plurality of fan blades 40. The fan blades 40 are each attached to a disk 42, with the fan blades 40 and disk 42 together rotatable about the longitudinal axis 12 by the LP shaft 36. For the embodiment depicted, the turbofan engine 10 is a direct drive turbofan engine, such that the LP shaft 36 drives the fan 38 of the fan section 14 directly, without use of a reduction gearbox. However, in other exemplary embodiments of the present disclosure, the fan 38 may instead be a variable pitch fan, and the turbofan engine 10 may include a reduction gearbox, in which case the LP shaft 36 may drive the fan 38 of the fan section 14 across the gearbox.

Referring still to the exemplary embodiment of FIG. 1, the disk 42 is covered by rotatable front hub 48 aerodynamically contoured to promote an airflow through the plurality of fan blades 40. Additionally, the exemplary turbofan engine 10 includes an annular nacelle assembly 50 that circumferentially surrounds the fan 38 and/or at least a portion of the turbomachine 16. For the embodiment depicted, the nacelle assembly 50 is supported relative to the turbomachine 16 by a plurality of circumferentially-spaced outlet guide vanes 52. Moreover, a downstream section 54 of the nacelle assembly 50 extends over an outer portion of the casing 18 so as to define a bypass airflow passage 56 therebetween. The ratio between a first portion of air through the bypass airflow passage 56 and a second portion of air through the inlet 20 of the turbomachine 16, and through the core air flowpath 37, is commonly known as a bypass ratio.

Referring still to FIG. 1, the turbofan engine 10 further includes a controller 58 for controlling operation of the turbofan engine 10. More specifically, the controller 58 may control one or more operations of the turbofan engine 10 and record operational and performance data of the turbofan engine 10. The controller 58 may be a single controller or, in some embodiments, multiple controllers. In some embodiments, the controller 58 is an electronic engine controller (EEC). In some embodiments, the controller 58 may be operated as a full authority digital engine control (FADEC) system.

The controller 58 is communicatively coupled with various components of the turbofan engine 10 (e.g., via one or more suitable wireless or wired communication links). It is generally contemplated that the controller 58 can be communicatively coupled with any suitable component of the turbofan engine 10, to other computing systems or components of the aircraft in which the turbofan engine 10 is coupled to, and/or to other remote computing systems or components (e.g., a ground system, a maintenance system) external to the aircraft.

It should be appreciated, however, that the exemplary turbofan engine 10 depicted in FIG. 1 is by way of example only, and that in other exemplary embodiments, aspects of the present disclosure may additionally, or alternatively, be applied to any other suitable gas turbine engine. For example, in other exemplary embodiments, the turbofan engine 10 may instead be any other suitable aeronautical gas turbine engine, such as a turbojet engine, turboshaft engine, turboprop engine, etc. Additionally, in still other exemplary embodiments, the exemplary turbofan engine 10 may include or be operably connected to any other suitable accessory systems. Additionally, or alternatively, the exemplary turbofan engine 10 may not include or be operably connected to one or more of the accessory systems discussed above.

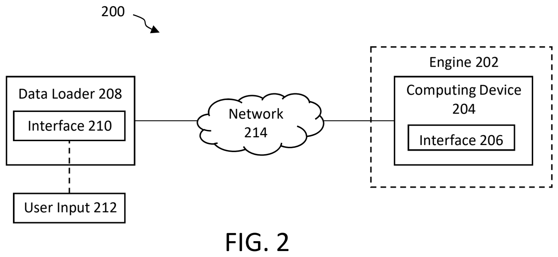

FIG. 2 illustrates a block diagram of an exemplary system 200 in accordance with various embodiments. The system 200 includes an engine 202 and a data loader 208. The engine 202 may be the engine 10 of FIG. 1. The engine 202 may include and/or be in communication with one or more computing devices 204. In some embodiments, the computing device 204 may be an electronic engine controller. The computing device 204 communicates (e.g., transmit, receive, send, push, etc.) with the data loader 208 via a network 214. More specifically, the data loader 208 is communicatively coupled to the computing device 204 to, in part, send software files such as field loadable software, referred to herein as loadable parts, to the computing device 204. The computing device 204 authenticates and, in some instances, stores the loadable part as described below in FIGS. 3-6.

The computing device 204, or more specifically the electronic engine controller, may include one or more processors and one or more memory devices. The computing device 204 may include an interface module 206, for example, to communicate (e.g., transmit, receive, send, etc.) with the data loader 208. The one or more processors may include a microcontroller, a microprocessor, central processing unit core(s), an application-specific integrated circuit (ASIC), a field programmable gate array (FPGA), etc. The one or more memory devices may include machine readable medium that may be non-transitory and may further include random access memory (RAM), read-only memory (ROM), electrically erasable programmable read-only memory (EEPROM), flash memory, a hard disk drive, etc. The one or more processors may execute instructions (i.e., programming or software code) stored on the one or more memory devices to perform operations such as any operation or function for which the computing device 204 is configured to perform. In some embodiments, functionality described with respect to FIGS. 3-6 may be included in the instructions stored on the one or more memory devices.

The network 214 can be substantially any relevant wired and/or wireless computer and/or communications networks (one or more local area networks (LAN), one or more wireless area networks (WAN), one or more other wireless networks (e.g., cellular, Wi-Fi, Bluetooth, LoRa, LoRa-WAN, etc.), other such networks, or a combination of two or more of such networks). While computing device 204 is shown, in some forms, the functionalities of the computing device 204 may be implemented on one or more computing systems communicating on the network 214.

The data loader 208 is any type of electronic communication device. For example, the data loader 208 may include a computer, a laptop, or any other suitable device capable of loading software onto an electronic device. The data loader 208 may include an interface 210 to receive user input 212 and communicate (e.g., send and receive data) with the computing device 204. The user input 212 may include commands, software files, configuration settings, and other various types of data. In some embodiments, the data loader 208 may transmit the loadable parts to the computing device 204 in response to receiving the user input 212.

Referring to FIG. 3, a block diagram of an exemplary system 300 for authenticating a loadable part 304 is shown in accordance with various embodiments. The system 300 includes a computing device 302 that includes a key management system 312, a storage device 316, and a data load function 320 to load the loadable part 304.

The computing device 302 may be, for example, computing device 204 in FIG. 2. In some aspects, the computing device 302 may be an electronic engine controller. For example, the electronic engine controller may be operably coupled to an engine installed on an aircraft. The computing device 302 may receive a loadable part 304 from a data loader, such as data loader 208 as shown in FIG. 2, in response to the computing device 302 accepting the load request. The loadable part 304 includes a new public key 306. In some embodiments, the loadable part 304 may include the new public key 306, and new computer software configuration items (CSCI) files 308.

The storage device 316 may store one or more loadable software parts 318, and a public key 314 (e.g., installed public key) that have been previously received, authenticated, and loaded in the computing device 302. In some embodiments, the storage device 316 may additionally store previously installed (e.g., authenticated) computer software configuration items (CSCI) files.

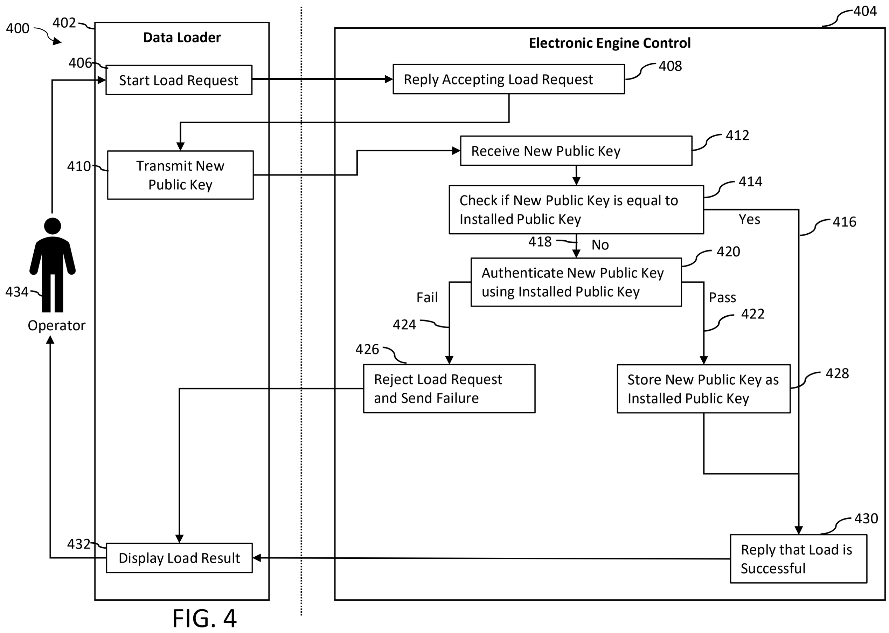

The key management system 312 performs an authentication process of the loadable part 304 that includes the new public key 306. More specifically, the key management system 312 may access the storage device 316 to perform authentication, in part, by comparing the new public key 306 to an installed public key 314 stored in the storage device 316 to determine whether to load the new public key 306. Moreover, the key management system 312 may, in some embodiments, update and replace the installed public key 314 with the new public key 306 based on a result of the authentication as described in further detail with reference to FIGS. 4-5.

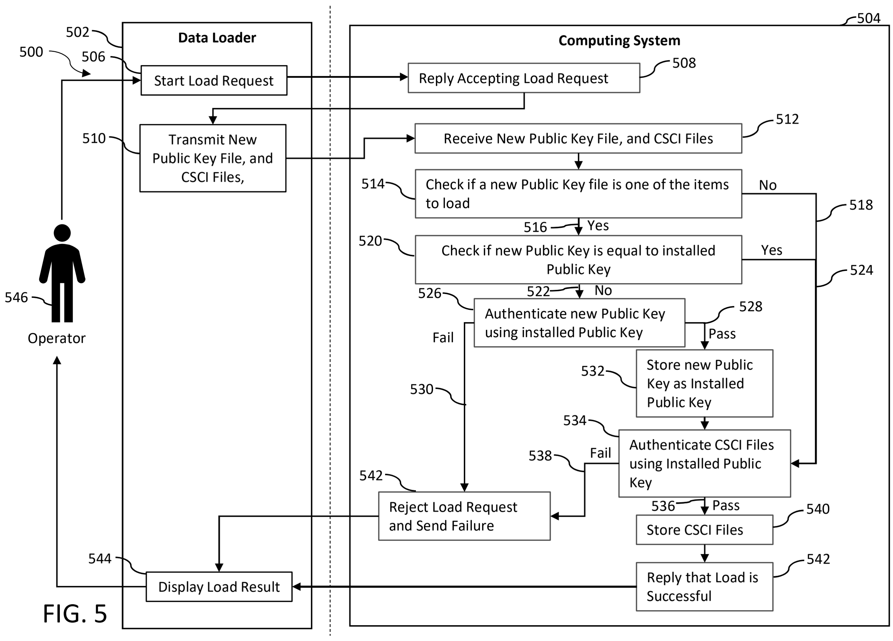

FIGS. 4 and 5 illustrate exemplary scenarios for authenticating and updating a public key in a computing system on an aircraft while using a single field loadable part. The public key may be the only item in the field loadable part (as shown in FIG. 4) or may be one of several items in the field loadable part (as shown in FIG. 5). As will be appreciated from the description below, the process in accordance with various embodiments may be implemented by an electronic engine controller operably and/or communicatively coupled to one or more aircraft engines while such aircraft engines are installed on and/or in an aircraft to field load the one or more loadable parts.

Referring to FIG. 4, a flow diagram of an exemplary process 400 of authenticating and updating a public key in a computing system on an aircraft while using a single field loadable part is shown in accordance with various embodiments. The process 400, in some embodiments, is implemented between a data loader 402 and an electronic engine controller 404. The electronic engine controller 404 includes, in part, an installed public key that has been previously received, authenticated, and stored in the electronic engine controller 404.

The process 400 begins with the initiation of a load request by the data loader 402. At step 406, the data loader 402 generates the load request and sends the load request to the electronic engine controller 404. In some embodiments, the load request includes details about the load and/or software to be loaded (e.g., updated or installed). In some embodiments, the software includes one or more loadable parts and a new public key associated with the one or more loadable parts. For example, the one or more loadable parts may be a field loadable software part. In some embodiments, the data loader 402 may generate the load request in response to receiving input from an operator 434. For example, the operator 434 may enter information about the loadable part to be loaded and generate the load request by clicking a button, entering a command, or selecting an option through the interface of the data loader 402, such as interface 210 shown in FIG. 2. In some embodiments, the data loader 402 may generate the load request to start the loading process of the one or more loadable parts to put the engine (such as engine 100 as shown in FIG. 1) in a state of conformance when a state of the loadable parts previously loaded on the electronic engine controller 404 is not known. For example, the loadable parts may include engine control software. Additionally, or alternately, the data loader 402 may generate the load request to update the public key stored in the electronic engine controller 404 due to expiration of the public key or the private key associated with the public key no longer being secret.

At step 408, the electronic engine controller 404 determines that the load request is valid and, in some embodiments, sends a reply to the data loader 402 accepting the load request. In some embodiments, the electronic engine controller 404 determines if the load request is valid based on predefined criteria such as, for example, verifying a format of the load request, and/or a source of the load request. If the request is accepted, at step 410, the data loader 402 transmits a loadable part that includes a new public key to the electronic engine controller 404. In some embodiments, the data loader 402 transmits the loadable part that includes a new public key that has been signed with the private key associated with the previously installed public key stored on the electronic engine controller 404.

At step 412, the electronic engine controller 404 receives the loadable part that includes the new public key from the data loader 402. Next, at step 414, the electronic engine controller 404 checks if the new public key is equal to the installed public key. More specifically, the electronic engine controller 404 compares the new public key with the installed public key to determine whether the new public key matches the installed public key. The new public key and the installed public key may be compared using any suitable comparison method, such as, for example, a Byte-by-Byte Comparison, a hash comparison, a key attribute comparison, a fingerprint comparison, or the like. If the new public key is determined to be equal 416 to the installed public key, the electronic engine controller 404 proceeds to step 430 as described below. For example, the authentication check is bypassed or skipped and the installed public key is maintained when the new public key is determined to be equal 416 to the installed public key. Alternately, if the new public key is determined not to be equal 418 to the installed public key, the electronic engine controller 404 proceeds to step 420. In this manner, the electronic engine controller 404 only attempts to authenticate the new public keys in the loadable part when the public key differs from the installed public key already stored (e.g., programmed) in the electronic engine controller 404. In other words, the same loadable part is not reloaded onto the electronic engine controller 404 when the electronic engine controller 404 already has the loadable parts installed to prevent engine configuration issues and reduce operation confusion since two identical loadable parts are not installed on the electronic engine controller 404.

In some embodiments, prior to checking if the new public key is equal to the installed public key at step 414, the electronic engine controller 404 checks if the new public key is one of the items to be installed (e.g., as shown at step 514 in FIG. 5). The electronic engine controller 404 determines based on the load request and/or the loadable part received from the data loader whether the new public key is one of the items to be loaded on the electronic engine controller 404. If the new public key is not one of the items to be loaded, the electronic engine controller 404 skips step 414 and proceeds to step 430 as described below. Alternately, if the new public key is one of the items to be loaded, the electronic engine controller 404 proceeds to step 414 as described above.

At step 420, the electronic engine controller 404 performs an authentication check on the new public key. Any suitable authentication process may be employed. For example, the electronic engine controller 404 may verify the one or more signatures. The new public key is authenticated when the one or more signatures are verified. If the new public key fails the authentication check, the electronic engine controller 404 proceeds to step 426 as described below. Alternately, if the new public key passes the authentication check, the electronic engine controller 404 proceeds to step 428 as described below.

At step 426, the electronic engine controller 404 rejects the load request in response to the new public key failing 424 the authentication check. The electronic engine controller 404 sends a reply to the data loader 402 indicating the load result. More specifically, the electronic engine controller 404 transmits information to the data loader 402 indicating that the load failed.

At step 428, the new public key is stored as the installed public key in response to the new public key passing 422 the authentication check at step 420.

At step 430, the electronic engine controller 404 executes the load request in response to the new public key being stored as the installed public key (as described in step 428). Additionally, or alternately, the electronic engine controller 404 executes the load request in response to the new public key being equal to the installed public key (as described in step 414). The electronic engine controller 404 sends a reply to the data loader 402 indicating the load result. More specifically, the electronic engine controller 404 transmits information to the data loader 402 indicating that the load is successful.

In some embodiments, the load result is displayed on an interface of the data loader 402 to be viewed by the operator 434 at step 432. The load result may include the reply that the load is successful or that the load failed as described above. In one example, the load result displayed on the data loader 402 may inform the operator 434 that the load loaded correctly since the new public key had been previously installed. In another example, the load result displayed on the data loader 402 may inform the operator 434 that the load loaded correctly since the new public key was authenticated and subsequently stored in the electronic engine controller 404. In yet another example, the load request displayed on the data loader 402 may inform the operator 434 that the load requested failed due to the new public key not being authenticated.

Referring to FIG. 5, a flow diagram of an exemplary process 500 of authenticating and updating a public key in a computing system on an aircraft while using a single field loadable part is shown in accordance with various embodiments. The process 500, in some embodiments, is implemented between a data loader 502 and an electronic engine controller 504. The electronic engine controller 504 includes, in part, an installed public key, and one or more installed CSCI files. In other words, the installed public key and the installed CSCI files have been previously received, authenticated, and stored in the electronic engine controller 504.

The process 500 begins with the initiation of a load request by the data loader 502. At step 506, the data loader 502 generates the load request and sends the load request to the electronic engine controller 504. The load request includes details about the software to be loaded (e.g., updated or installed). In some embodiments, the software includes one or more loadable parts, a public key associated with the one or more loadable parts, and one or more CSCI files. For example, the one or more loadable parts may be a field loadable software part. In some embodiments, the data loader 502 may generate the load request in response to receiving input from an operator 546. For example, the operator 546 may enter information about the loadable part to be loaded and generate the load request by clicking a button, entering a command, or selecting an option through the interface of the data loader 502, such as interface 210 shown in FIG. 2. In some embodiments, the load request may be generated to load one or more loadable parts to put the engine (such as engine 100 as shown in FIG. 1) in a state of conformance when a state of the loadable parts previously loaded on the electronic engine controller 504 is not known. The loadable parts may include engine control software. Additionally, or alternately, the load request may be generated to update the public key stored in the electronic engine controller 504 due to expiration of the public key or the private key associated with the public key no longer being secret.

At step 508, the electronic engine controller 504 determines that the load request is valid and, in some embodiments, sends a reply to the data loader 502 accepting the load request. If the request is accepted, at step 510, the data loader 502 transmits a loadable part that includes a new public key to the electronic engine controller 504. The new public key has been signed with the private key associated with the previously installed public key stored on the electronic engine controller 504. In some embodiments, the data loader 502 transmits the loadable part that includes a new public key, and one or more new CSCI files signed with the private key associated with the installed public key (e.g., the new public key transmitted by the data loader 502, or the previously installed public key).

At step 512, the electronic engine controller 504 receives the loadable part that includes the new public key from the data loader 502. Additionally, or alternately, the electronic engine controller 504 may receive one or more CSCI files. Next, at step 514, the electronic engine controller 504 checks if the new public key is one of the items to be installed. The electronic engine controller 504 determines if the new public key is one of the items to be installed based on, for example, information received during the load request at step 508. If the public key is determined to be one of the items to load 516, the electronic engine controller 504 proceeds to step 520. Alternately, if the public key is determined not to be one of the items to load 518, the electronic engine controller 504 proceeds to step 534 as described below.

At step 520, the electronic engine controller 504 checks if the new public key is equal to the installed public key. More specifically, the electronic engine controller 504 compares the new public key with the installed public key to determine whether the new public key matches the installed public key. The new public key and the installed public key may be compared using any suitable comparison method, such as, for example, a Byte-by-Byte Comparison, a hash comparison, a key attribute comparison, a fingerprint comparison, or the like. If the new public key is determined to be equal 524 to the installed public key, the electronic engine controller 504 proceeds to step 534 as described below. For example, the authentication check is bypassed or skipped and the installed public key is maintained when the new public key is determined to be equal 524 to the installed public key. Alternately, if the new public key is determined not to be equal 522 to the installed public key, the electronic engine controller 504 proceeds to step 526.

At step 526, the electronic engine controller 504 performs an authentication check on the new public key. Any suitable authentication process may be employed. For example, the electronic engine controller 504 may verify the one or more signatures. The new public key is authenticated when the one or more signatures are verified. If the new public key fails 530 the authentication check, the electronic engine controller 504 proceeds to step 542 as described below. Alternately, if the new public key passes 528 the authentication check, the electronic engine controller 504 proceeds to step 532 as described below.

At step 532, the new public key is stored as the installed public key in response to the new public key passing 528 the authentication check at step 526.

At step 534, the electronic engine controller 504 performs an authentication check on the CSCI files using the installed public key. Any suitable authentication process may be employed. For example, the electronic engine controller 504 may verify the one or more signatures of the CSCI files. The CSCI files are authenticated when the one or more signatures are verified. In some embodiments, the installed public key is the new public key stored as the installed public key as described in step 532. In some embodiments, the installed public key is the public key previously installed prior to the electronic engine controller 504 accepting the load request. For example, the installed public key is the previously installed public key when the new public key is not one of the items to load (as described in step 514) and/or when the new public key is equal to the installed public key (as described in step 520).

At step 540, the CSCI files are stored in the electronic engine controller 504 in response to the CSCI files passing 536 the authentication check at step 534. Subsequently, at step 542, the electronic engine controller 504 executes the load request and sends a reply to the data loader 502 indicating the load result. More specifically, the electronic engine controller 504 transmits information to the data loader 502 indicating that the load is successful.

At step 542, the electronic engine controller 504 rejects the load request in response to the CSCI files failing 538 the authentication check (as described in step 534). Additionally, or alternately, the electronic engine controller 504 rejects the load request in response to the new public key failing 530 the authentication check (as described in step 526). The electronic engine controller 504 sends a reply to the data loader 502 indicating the load result. More specifically, the electronic engine controller 504 transmits information to the data loader 502 indicating that the load failed.

In some embodiments, the load result is displayed on an interface of the data loader 502 to be viewed by the operator 546 at step 544. The load result may include the reply that the load is successful or that the load failed as described above. In one example, the load result displayed on the data loader 502 may inform the operator 546 that the load loaded correctly since the new public key had been previously installed and the CSCI files were authenticated using the new public key. In another example, the load result displayed on the data loader 502 may inform the operator 546 that the load loaded correctly since the new public key was authenticated and subsequently stored and the CSCI files were authenticated and subsequently stored using the new public key. In yet another example, the load request displayed on the data loader 502 may inform the operator 546 that the load failed due to the new public key and/or the CSCI files not being authenticated.

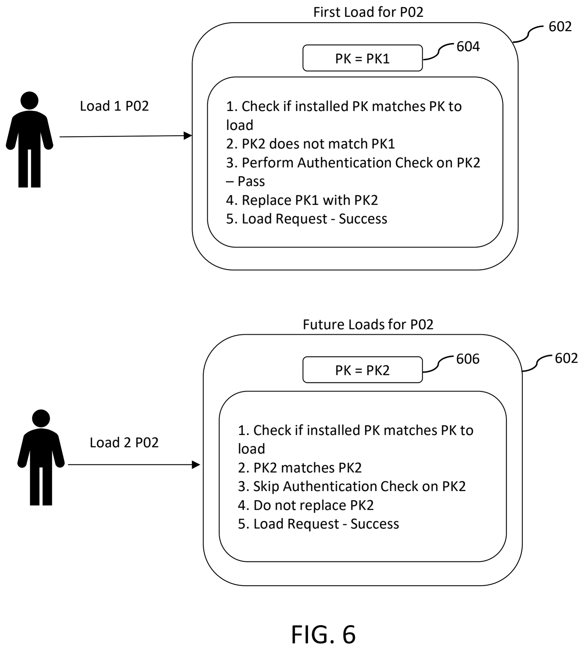

FIG. 6 illustrates a simplified block diagram of a process for authenticating and updating a public key in a computing system on an aircraft in a first load and one or more subsequent loads. The computing system may be an electronic engine controller. When the load (load 1) which includes a loadable part P02 is loaded for a first time, the computing system 602 checks if the installed public key (PK1) 604 matches the new public key (PK2) included the loadable part of the load P02. In the embodiment depicted, the installed public key (PK1) 604 does not match the new public key (PK2) and an authentication process check is performed on the new public key (PK2). In the event that the new public key (PK2) is authenticated, the installed public key (PK1) is replaced with the new public key (PK2) and the load request is successful. When the load (load 2) which includes the same loadable part P02 is loaded for a second subsequent time, the computing system 602 checks if the installed public key (PK2) 606 matches the new public key (PK2). In the embodiment depicted, the installed public key (PK2) 606 matches the new public key (PK2) and the authentication check is bypassed or skipped, the installed public key (PK2) 606 is not replaced with the new public key (PK2) and the load request is successful. In this manner, the loadable part (P02) is successfully loaded in a first load after replacing the installed public key with the new public key and in one or more future loads for the loadable part (P02) that includes the new public key when the new public key does not change. In other words, the same loadable part is only installed on the computing device once to prevent engine configuration issues and reduce operator confusion since two identical loadable parts are not installed on the computing device.

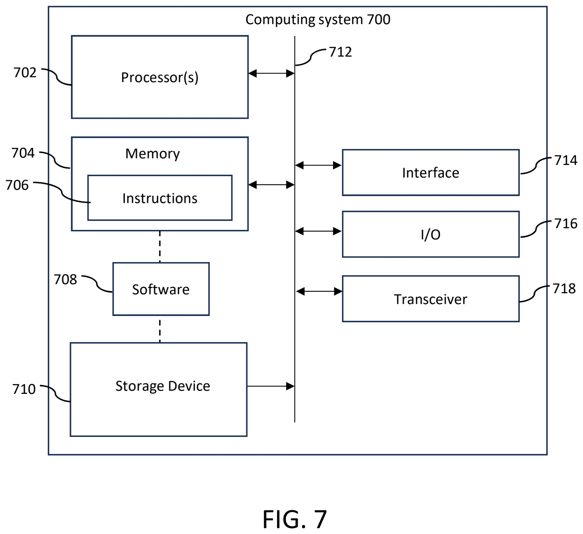

FIG. 7 illustrates an exemplary computing system 700 that may be used for implementing any of the components, processing resources, circuits, circuitry, systems, functionality, logic, apparatuses, processes, and/or above or below mentioned systems or devices (e.g., computing device, electronic engine controller, data loader).

In the exemplary embodiment depicted in FIG. 7, the exemplary computing system 700 includes a processor 702, memory 704, storage device 710 and a communication bus 712. In some embodiments, the exemplary computing system 700 includes an interface 714, input/output (I/O) ports 716 and a transceiver 718. The communication bus 712 provides communication between the processor 702, memory 704, storage device 710 and the interface 714, I/O ports 716 and transceiver 718. While FIG. 7 illustrates the various components being communicatively coupled together via a communication bus 712, it is contemplated that the various components may be coupled to the processor 702 and/or one or more other components directly.

The processor 702 can be implemented through one or more processors, microprocessors, central processing unit, logic, local digital storage, firmware, software, and/or other control hardware and/or software, and may be used to execute or assist in executing the steps of the processes, methods, functionality and techniques described herein, and control various communications, decisions, configurations, interfaces, logging, reporting, etc. The processor 702 is configured to execute instructions 706 stored on the memory 704 to perform operations such as any operation or function for which the computing device is configured to perform as described above. In some embodiments, the exemplary computing system 700 may include software 708 that enables the functionality described above. In some forms, the software 708 may include instructions that cause the processor 702 to perform one or more processes for updating a public key and/or transmitting a loadable part as described herein.

The memory 704 and storage device 710 may be any medium or device capable of storing information or executable instructions, such as, RAM, ROM, EEPROM, flash memory, a hard disk drive, an optical disc, or the like. The memory 704 may be disposed within the computing system 700, in which case the executable instructions may be deemed installed or embedded on the exemplary computing system 700. Additionally or alternatively, some or all of the memory 704 may be one or more remote, external to and/or portable storage medium, and may be part of an installation package.

The interface 714 may be any suitable hardware (e.g., USB ports, ethernet ports, etc.), software (e.g. application programming interfaces, communication protocols, etc.), network interfaces (e.g., network interface cards) or combinations thereof for communicating with one or more external devices over wired or wireless networks. In some embodiments, the interface 714 may allow an operator to interact with the computing system 700 and receive information through the computing system 700. For example, the interface 714 may include a display and/or one or more user inputs, such as buttons, touch screen, track ball, keyboard, mouse, etc., which can be part of or wired or wirelessly coupled with the computing system 700. Further the transceiver 718 can be configured for wired, wireless, optical, fiber optical cable, satellite, or other such communication configurations or combinations of two or more of such communications.

The I/O ports 716 can be substantially any relevant port or combinations of ports, such as but not limited to USB, Ethernet, or other such ports. The I/O ports 716, or in some embodiments interfaces 714, can be configured to allow wired and/or wireless communication coupling to external devices. For example, the I/O ports 716 can provide wired communication and/or wireless communication (e.g., Wi-Fi, Bluetooth, cellular, RF, and/or other such wireless communication).

Pursuant to present teachings, in current methods to update public keys in computing systems, the new public keys must be signed with the private key from the existing public-private key pair. After the new public key is stored in the computing system, that same load image of the public key cannot be loaded again because the authentication will fail. This can cause configuration management issues and significant operator effort due to the precise sequence of steps outlined in the instructions and specific order to load the loadable parts, increasing the likelihood of operator confusion. Generally speaking, various aspects of the present teachings can be employed with systems, methods, and the like to facilitate authenticating and updating public keys in computing systems on an aircraft. The approaches described herein allow updates to the public keys in the computing system while using a single loadable part that will load successfully the first time and on subsequent requests to reduce operator confusion and the time and complexity required during public key updates.

Further aspects of the disclosure are provided by the subject matter of the following clauses:
A method, comprising: receiving, by a computing system associated with an aircraft system and having an installed public key, a loadable part that includes a new public key; comparing the new public key with the installed public key to determine whether the new public key matches the installed public key; performing an authentication check on the new public key in response to the new public key not matching the installed public key; in response to the new public key passing the authentication check, replacing the installed public key with the new public key; and in response to the new public key failing the authentication check, transmitting information to a data loader indicating an unsuccessful load.

The method of any preceding clause, further comprising: bypassing the authentication check on the new public key in response to the new public key matching the installed public key.

The method of any preceding clause, further comprising: maintaining the installed public key in response to the new public key matching the installed public key.

The method of any preceding clause, further comprising: transmitting information to the data loader indicating a successful load in response to the new public key matching the installed public key.

The method of any preceding clause, further comprising: prior to the comparing the new public key with the installed public key, checking whether the new public key is to be loaded into the computing system.

The method of any preceding clause, further comprising: bypassing the comparing the new public key with the installed public key in response to a determination that the new public key is not to be loaded into the computing system.

The method of any preceding clause, further comprising: performing a second authentication check on any other items included in the loadable part in response to the new public key matching the installed public key.

The method of any preceding clause, further comprising: transmitting information to the data loading indicating a successful load in response to replacing the installed public key with the new public key.

The method of any preceding clause, wherein the loadable part is loaded in a first load in response to replacing the installed public with the new public key; and further comprising loading the loadable part in one or more subsequent loads in response to receiving the loadable part that includes the new public key.

The method of any preceding clause, further comprising: performing a second authentication check on any other items included in the loadable part after the replacing the installed public key with the new public key.

The method of any preceding clause, further comprising: receiving the loadable part in response to a load request being accepted.

The method of any preceding clause, wherein the computing system comprises an electronic engine controller.

A system, comprising: an interface for communicating with a data loader; and a processor-based system coupled to the interface and having an installed public key, the processor-based system associated with an aircraft, and wherein the processor-based system is configured to perform steps comprising, receiving a loadable part that includes a new public key; comparing the new public key with the installed public key to determine whether the new public key matches the installed public key; performing an authentication check on the new public key in response to the new public key not matching the installed public key; in response to the new public key passing the authentication check, replacing the installed public key with the new public key; and in response to the new public key failing the authentication check, transmitting information to a data loader indicating an unsuccessful load. . .

The system of any preceding clause, wherein the processor-based system is further configured to perform steps comprising: bypassing the authentication check on the new public key in response to the new public key matching the installed public key.

The system of any preceding clause, wherein the processor-based system is further configured maintain the installed public key in response to the new public key matching the installed public key.

The system of any preceding clause, wherein the processor-based system is further configured to transmit information to the data loader indicating a successful load in response to the new public key matching the installed public key.

A non-transitory computer readable storage medium storing one or more computer programs configured to cause a processor-based system to perform steps comprising: receiving, by the processor-based system having an installed public key, a loadable part that includes a new public key; comparing the new public key with the installed public key to determine whether the new public key matches the installed public key; performing an authentication check on the new public key in response to the new public key not matching the installed public key; in response to the new public key passing the authentication check, replacing the installed public key with the new public key; and in response to the new public key failing the authentication check, transmitting information to a data loader indicating an unsuccessful load.

The non-transitory computer readable storage medium of any preceding clause, wherein the one or more computer programs are further configured to cause the processor-based system to perform steps comprising: bypassing the authentication check on the new public key in response to the new public key matching the installed public key.

The non-transitory computer readable storage medium of any preceding clause, wherein the one or more computer programs are further configured to cause the processor-based system to perform steps comprising: maintaining the installed public key in response to the new public key matching the installed public key.

The non-transitory computer readable storage medium of any preceding clause, wherein the processor-based system is further configured to transmit information to the data loader indicating a successful load in response to the new public key matching the installed public key.

## Claims

1. A method (400), comprising:
receiving (412), by a computing system (404) associated with an aircraft system (10) and having an installed public key, a loadable part that includes a new public key;
comparing (414) the new public key with the installed public key to determine whether the new public key matches (416)(418) the installed public key;
performing (420) an authentication check on the new public key in response to the new public key not matching (418) the installed public key;
in response to the new public key passing (422) the authentication check (420), replacing (428) the installed public key with the new public key; and
in response to the new public key failing (424) the authentication check (420), transmitting (426) information to a data loader (402) indicating an unsuccessful load.

2. The method (400) of claim 1, further comprising:
bypassing the authentication check on the new public key (306) in response to the new public key matching (416) the installed public key .

3. The method (400) of any preceding claim, further comprising:
maintaining the installed public key in response to the new public key matching the installed public key.

4. The method (400) of any preceding claim, further comprising:
transmitting (430) information to the data loader (402) indicating a successful load in response to the new public key matching the installed public key.

5. The method (400) of any preceding claim, wherein performing (420) the authentication check further comprises:
using the new public key.

6. The method (400) of any preceding claim, further comprising:
prior to the comparing (414) the new public key with the installed public key, checking (518) whether the new public key is to be loaded into the computing system (404).

7. The method (400) of claim 6, further comprising:
bypassing the comparing (414) the new public key with the installed public key in response to a determination that the new public key is not to be loaded into the computing system (404).

8. The method (400) of claim 7, further comprising:
performing (534) a second authentication check on any other items included in the loadable part in response to the determination that the new public key is not to be loaded into the computing system (404).

9. The method (400) of any preceding claim, further comprising:
performing (534) a second authentication check on any other items included in the loadable part in response to the new public key matching (524) the installed public key.

10. The method (400) of any preceding claim, further comprising:
transmitting (430) information to the data loader indicating a successful load in response to replacing (428) the installed public key with the new public key.

11. The method (400) of claim 10, wherein the loadable part is loaded in a first load in response to replacing the installed public key with the new public key.

12. The method (400) of claim 11, further comprising:
loading the loading the loadable part in one or more subsequent loads in response to receiving the loadable part that includes the new public key.

13. The method (400) of any preceding claim, further comprising:
performing (534) a second authentication check on any other items included in the loadable part after the replacing (428) the installed public key with the new public key.

14. The method (400) of any preceding claim, further comprising receiving (412) the loadable part in response to a load request being accepted.

15. The method (400) of any preceding claim, wherein the computing system (404) comprises an electronic engine controller.
